# EUROPEAN PATENT SPECIFICATION

(11) **EP 2 243 255 B1**
(45) Date of publication and mention of the grant of the patent: **02.10.2013**
(21) Application number: 09705553.7
(22) Date of filing: 02.02.2009
(51) Int. Cl.: H04L 12/24, H04M 7/00

(54) **METHOD AND SYSTEM FOR DYNAMIC LINK FAILOVER MANAGEMENT**
VERFAHREN UND SYSTEM FÜR DYNAMISCHES STRECKEN-FAILOVER-MANAGEMENT
PROCÉDÉ ET SYSTÈME DE GESTION DE BASCULEMENT DE LIEN DYNAMIQUE

(30) Priority: 01.02.2008 US 6839 P
(43) Date of publication of application: 27.10.2010
(73) Proprietor: Allied Telesis Holdings K.K., Tokyo 141-0031 (JP)
(72) Inventor: BYCROFT, Nathan, Tokyo 141-0031 (JP); SATOH, Seiichiro, Tokyo 141-0031 (JP); WALKER, Graham, Tokyo 141-0031 (JP)
(74) Representative: Johnson, Richard Alan
(86) International application number: PCT/US2009/032873
(87) International publication number: WO 2009/097615

(56) References cited:
- WO-A1-2004/010653
- WO-A2-99/50964
- US-A1- 2007 237 085
- US-A1- 2007 237 085
- US-A1- 2008 028 157
- US-B1- 6 732 186
- US-B1- 6 870 827

## Description

### Field of the Invention

The present invention is directed to a method and system for providing redundancy and resiliency features to network devices, such as switches and routers. These features allow a network device to maintain active links to another device and monitor each link for failure. If a failure occurs, the system takes remedial action and diverts the network traffic to use the remaining active links, thereby keeping the network integrity intact and traffic flowing. When the failed link has been restored, network traffic is re-directed to its original path.

### Background of the Related Art

Existing network protocols, such as the Spanning Tree Protocol (STP), initially specified in ANSI/IEEE Standard 802.1 D, 1998 Edition, the Rapid Spanning Tree Protocol (RSTP), defined in IEEE Standard 802.1w-2001 , the Multiple Spanning Tree Protocol (MSTP), defined in IEEE Standard 802.1s, and Cisco's Per VLAN (Virtual Local Area Network) Spanning Tree Protocol (PVSTP), collectively referred to herein as xSTP, as well as Ethernet Protection Switching Ring (EPSR), a proprietary Allied Telesis, Inc., implementation of RFC 3619 providing resiliency specifically for network rings, and the Link Aggregation Control Protocol (LACP), defined in IEEE Standard 802.1AD, are effective for loop-prevention and assuring availability of backup paths. Although these protocols provide the possibility of disabling redundant paths in a network to avoid loops, and automatically re-enabling them when necessary to maintain connectivity in the event of a network failure, these protocols are usually only available on high-end network devices. Although EPSR and LACP are able to recover from a link failure within a few milliseconds, a typical response time for xSTP is between 3 and 30 seconds. This delay in response to failures is due, in part, to the basics of xSTP operations, which are tied to calculating the locations of link breakage points on the basis of user-provided values that are compared to determine the best (or lowest cost) paths for data traffic.

Redundancy and resiliency are important elements in network design. One problem that exists in the art today is that there are currently no suitable methods and systems that would allow network elements that do not have built-in redundancy and resiliency features to deliver similar levels of redundancy and resiliency, characteristic of high-end devices with built-in redundancy and resiliency features. In addition, there are currently no suitable methods and systems that provide failover management of redundant links and loop-free forwarding between devices with multiple connected LAN segments, using a simple control protocol on network devices that are not compatible with LACP or EPSR. Further, there are currently no suitable methods and systems that provide effective, cost-efficient and faster alternatives to the xSTP protocols, without the accompanying protocol complexity and increased hardware cost. Moreover, there are currently no suitable methods and systems that provide load sharing capabilities on network devices that are not compatible with the LACP protocols (e.g., various routers).
US 2007/0237085 describes a system and method for link failover in which an upstream switch sends a notification to disable a downstream link upon detecting a change of connectivity in an upstream link.
WO 99/50964 describes a method of ensuring quality of service for Data Network Telephone (DNT) calls, in which tests are periodically conducted on the DNT call path and, if available bandwidth falls below a threshold, an alternative conventional call is made.
US 6,870,827 describes a system for automatically routing a voice call depending on the quality of service existing in a data packet network at the time of the call.
WO 2004/010653 describes a failover transition system for a VLAN in which a master switch starts auto-negotiation of a set of physical ports on the VLAN when a network failure is detected.
US 6,732,186 describes a failover mechanism that operates in within the Application layer.

There is a need in the art to provide redundancy and resiliency features to networking devices that do not have built in redundancy and resilience features.

### SUMMARY OF THE PRESENT INVENTION

According to the invention, there is provided a method for performing link failover management on a network device according to claim 1, a system for performing link failover management on a network device according to claim 5, and a computer program product according to claim 13. The present invention may thus address the above identified needs, as well as others, by providing methods and systems for allowing network elements that do not have built-in redundancy and resiliency features to deliver similar levels of redundancy and resiliency, characteristic of high-end devices with built-in redundancy and resiliency features. In addition, aspects of the present invention provide methods and systems for failover management of redundant links and loop-free forwarding between devices with multiple connected LAN segments, using a simple control protocol on network devices that are not compatible with xSTP, EPSR or LACP. Further, aspects of the present invention provide methods and systems for effective, cost-efficient and faster alternatives to the xSTP protocols, without the accompanying protocol complexity and increased hardware cost. Moreover, aspects of the present invention provide methods and systems that deliver load sharing capabilities on network devices that are not compatible with the LACP protocol (e.g., various routers).

Additional advantages and novel features will be set forth in part in the description that follows, and in part will become more apparent to those skilled in the art upon examination of the following or upon learning by practice of the invention.

### BRIEF DESCRIPTION OF THE DRAWINGS

FIG. 1 illustrates an exemplary flowchart of a method for dynamic link failover, in accordance with an aspect of the present invention;

FIG. 2 illustrates an exemplary system diagram showing a healthy primary link, in accordance with an aspect of the present invention;

FIG. 3 illustrates an exemplary system diagram showing a failover condition, in accordance with an aspect of the present invention;

FIG. 4 illustrates an exemplary system diagram showing a recovery condition, in accordance with an aspect of the present invention;

FIG. 5 illustrates an exemplary system diagram showing a load sharing mechanism, in accordance with an aspect of the present invention;

FIG. 6 presents an exemplary system diagram of various hardware components and other features, for use in accordance with an aspect of the present invention; and

FIG. 7 is a block diagram of various exemplary system components, in accordance with an aspect of the present invention.

### DESCRIPTION OF THE INVENTION

Aspects of the present invention enable mimicking high-end features on low-end products, or products without built-in resilience and redundancy features, using generation and monitoring of health-check data. Health-check data may include monitoring the status of a data link or data path by sending health check packets. The health-check mechanisms may use ping-poll and trigger scripting features that are available, for example, in Allied Telesis, Inc. network devices, such as switches and routers running AW 1.6.1 and AW+ 5.2.1 and subsequent releases, for monitoring health-check data (see, e.g., www.alliedtelesyn.com, as viewed on December 18, 2008).

In accordance with one aspect, there may be two data links, a primary link and a secondary link. In addition, there may be a health-check virtual local area network (VLAN) which may be configured on the two data links, but is logically separate from the data links.

In accordance with one aspect, when a remote device becomes unreachable over the health-check VLAN, the data VLANs are removed from the primary link and added to the secondary link, so that traffic is restored across these VLANs. When the health-check mechanism detects that the remote device is reachable again via the primary link, a network loop has been prevented because traffic can only flow across the data VLAN which has been moved to the secondary link. To restore traffic on the primary link, the data VLANs are removed from the secondary link and added back to the primary link, i.e., the previous change is reversed. In this way, minimal disruption occurs, in accordance with this aspect, to services across the data VLANs when failover occurs, and no network loops are able to form.

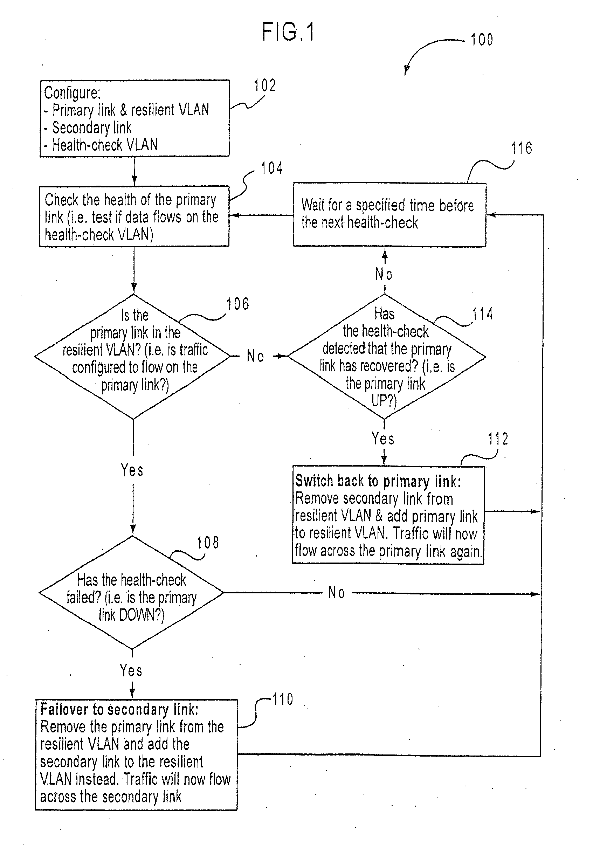

FIG. 1 illustrates an exemplary flow diagram 100 of functions performed for failover management of redundant virtual local area network (VLAN) links on a network switch, thereby preventing data (e.g., packets or frames) being sent via the VLAN from looping around the VLAN indefinitely through redundant links, in accordance with an aspect of the present invention.

In step 102, primary and secondary links may be configured among networking devices. A standard configuration script may be used, or the configuration may occur at the command line, among other configurations. In an aspect, the primary link may be used as the main link for transferring data while the secondary link may be a back-up link to the primary link. In addition, there may be two groups of data flowing across the primary link, network user data and health check data.

According to an aspect of the present invention, the primary link and the health-check VLAN may be configured to flow over the same data port. However, the health check VLAN may be logically separate from the traffic paths (e.g., the primary and secondary links), since the traffic paths and the health-check VLAN are using different VLANs. In one aspect, a health-check VLAN is uniquely associated with a primary link, so that failure and recovery of the primary link may be detected.

The health of the primary link may be checked by periodically sending a health-check packet and/or message over the health-check VLAN to test whether data is flowing over the primary link 104. Sending a health-check packet may be done using standard networking protocols. For example, a health-check data item (e.g., an Internet Control Message Protocol (ICMP) ping packet) may be used as the control protocol to detect the state of the primary path, also referred to throughout as primary link. It should be appreciated that the health of any networking device may be checked.

If, in reply to the health-check message, the other networking device returns a response, the primary link may be considered in good condition, since the primary link is up and responding to the health-check message 108. The data may continue to flow over the primary link until a subsequent periodic health-check message indicates that the primary has failed. The state of the primary link may be checked at periodic configurable intervals 116. For example, the health check signals may be transmitted every second or every two seconds, among other time periods. Thus, the data may continue to flow on the primary link while the health-check VLAN periodically checks the health of primary link.

If, in reply to the health-check message, the other networking device does not return a message, the primary link may be considered to have failed. For example, the primary link may be down with no traffic flowing across the primary link. When the health of the primary link fails, a failover to the secondary link may occur 110. For example, upon detecting a failure of a primary network path, a redundant secondary network path is activated. Thus, the data traffic may be removed from the primary link and redirected to flow on the secondary link. This may be achieved by reconfiguring the VLAN to operate on the secondary link instead of the primary link. The data traffic may flow over the secondary link, until a subsequent health-check message indicates the primary link has recovered.

While the data is flowing over the secondary link, it should be appreciated that the health check VLAN may monitor the status of the primary link by continuing to transmit health-check messages (e.g., steps 104 and 116), even if the primary link is down and network data is flowing on the secondary link. A determination whether the traffic is flowing over the primary link may occur at step 106. If the data traffic is flowing over the secondary link, instead of the primary link, a check occurs to determine whether the health check has detected that the primary link has recovered 114. If the primary link has not recovered, then the data traffic continues to flow on the secondary link until a subsequent health-check message 104 and 116 indicates the primary link has recovered.

However, if a detection indicates that the primary link has been recovered, the data traffic may be transferred back to the primary link by reconfiguring the VLAN to allow network data to flow on the primary link, instead of the secondary link 112. The detection may include receiving a response in reply to the health-check message 104, for example. Further, the secondary link may be closed to the forwarding of data traffic, thereby preventing a network loop. Once the data traffic is flowing on the primary link, the process repeats steps 116 and 104 by checking the health of the primary link.

In accordance with one aspect, multiple instances of the method of the present invention may provide load sharing of data using segregated VLANs over different links.

In accordance with one aspect, the method of the present invention utilizes a combination of changing switchport VLAN assignments to control traffic flow and the network device ping-polling and trigger features.

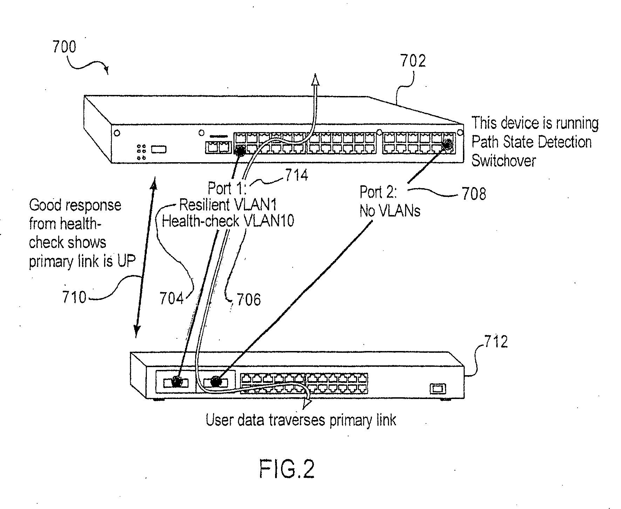

In one aspect, only one of the networking devices may use the method of the present invention, as illustrated in Figs. 2-5, while the other device simply responds to the health-check message sent. However, in another aspect, both networking devices in communication which each other may use the method of the present invention.

Referring now to Fig. 2, therein illustrated is an exemplary system 700 using a healthy primary link and running Path State Detection Switchover, in accordance with an aspect of the present invention: Path State Detection Switchover may be used to monitor the status of the primary link and to switch over to the secondary link if a failure on the primary link occurs. As illustrated in Fig. 2, a first networking device 702 may have multiple ports for data transfer. For example, networking device 702 may have port1 714 and port2 708. Port1 714 may be a primary link and port2 708 may be a back-up secondary link. It should be appreciated that the primary and secondary link may be configured, respectively, (e.g., step 102 in Fig. 1) from any port on a networking device. In addition, port1 714 and port2 708 may be communicating with ports on a second networking device 712 allowing data to transfer between networking device 702 and networking device 712.

The data traffic on resilient VLAN1 704 and the health-check VLAN10 706 may be configured to flow on primary link 714. Health check packets checking the health of primary link 714 may be sent over health-check VLAN10 706. The second networking device 712 may respond to the heath-check packets, thus the health of primary link 714 may be considered good 710. Therefore, since the health of the primary link 714 is good, the data continues to flow over VLAN1 704 on primary link 714. Thus, in this aspect, no data is flowing over secondary link 708.

It should be appreciated it might be more beneficial for the data to continue to flow over primary link 714 instead of secondary link 708. For example, secondary link 708 may be more expensive to use (e.g., a dial-up link, using expensive leased equipment, among others), or secondary link 708 may have a lower bandwidth with lower traffic throughput, among other disadvantages. Thus, secondary link 708 may be beneficial for use in emergency situations, e.g., when primary link 714 fails, not for regular data communications.

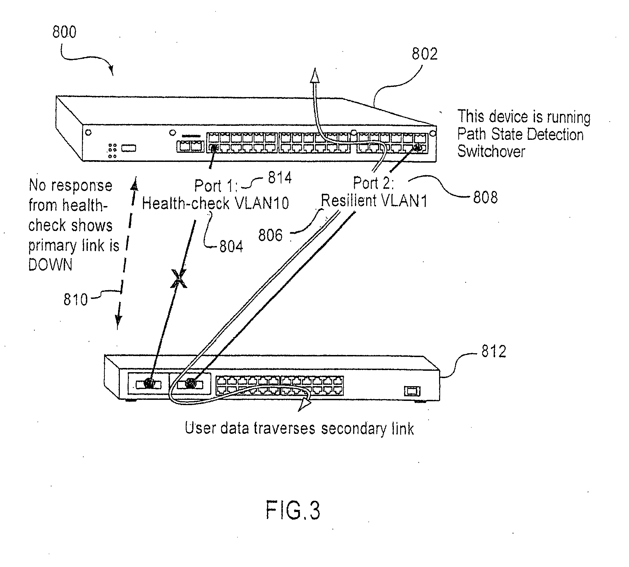

Referring now to Fig. 3, therein illustrated is an exemplary system 800 using a failover condition, in accordance with an aspect of the present invention. As discussed above in reference to Fig. 2, networking device 802 may have a primary link port1 814 and a secondary link port2 808. In addition, primary link 814 may have a health-check VLAN10 804 checking the health of primary link 814. However, in this aspect, networking device 812, which is communicating with networking device 802, is not responding to the health-check packets being sent on health-check VLAN10 804. Thus, primary link 814 may be considered to have failed, triggering the need for a failover to secondary link 808. Therefore, data traffic on resilient VLAN1 806 may be configured to flow on secondary link 808, instead of on primary link 814, by removing VLAN1 806 from primary link 814 and transferring VLAN1 806 to secondary link 808.

While data traffic on resilient VLAN1 806 is flowing on secondary link 808, health check packets may continue to be sent over health-check VLAN10 804 checking the health of primary link 814. It should be appreciated that the network user may not notice a disruption in network traffic, even though primary link 814 has failed. Since the failover to secondary link 808 occurs almost instantaneously, the data traffic may continue to flow with little or no interruption.

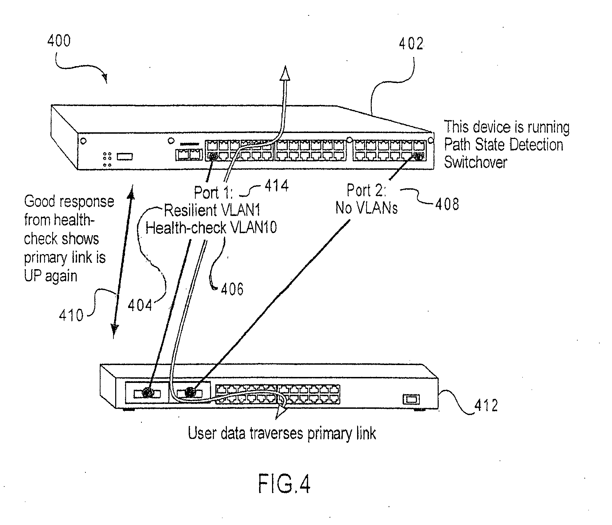

Turning now to Fig. 4, therein illustrated is an exemplary system diagram 400 using a recovery condition, in accordance with an aspect of the present invention. Networking device 402 may have a primary link port1 414, a secondary link port2 408, and a health-check VLAN10 406, among other features. Further, networking device 412 may be communicating with networking device 402 via primary link 414 and secondary link 408. In this aspect, networking device 412 may return a response to health-check packets, indicating that primary link 414 may have recovered 410.

The data traffic on resilient VLAN1 404 may be reconfigured to flow on primary link 414 instead of secondary link 408 by removing VLAN1 404 from secondary link 408 and transferring VLAN1 404 to the primary link 414. In an aspect, an automated mechanism may be used to transfer VLAN1 404 from secondary link 408 to primary link 414. Secondary link 408 may become the back-up link again without network data flowing over secondary link 408. Thus, once the recovery is complete, both the data traffic on resilient VLAN1 404 and health-check VLAN10 406 are flowing on the primary link 414.

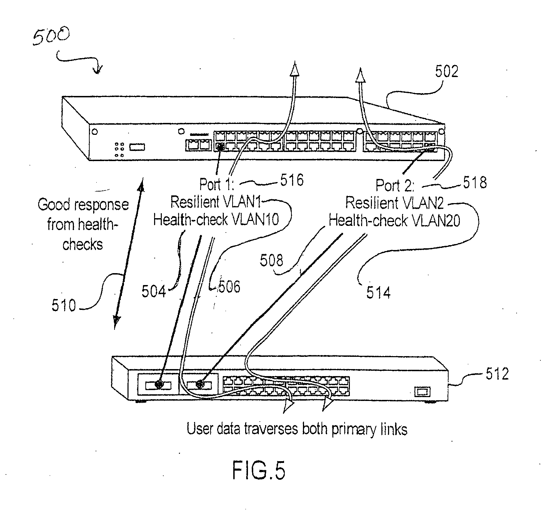

In accordance with another aspect, multiple instances of "health-check VLANs" may be configured to monitor alternate links, as illustrated in Fig. 5. The data VLANs may be distributed across multiple connected LAN segments, so that load sharing occurs when all links are up and operating. As illustrated in the exemplary system diagram 500 in Fig. 5, a first link port1 516 may be the primary link for data VLAN1 506 and the secondary link for data VLAN2 514, and a second link port2 518 may be the primary link for data VLAN2 514 and the secondary link for data VLAN1 506. Both links 516 and 518 may have health-check VLAN10 504 and health-check VLAN20 508, respectively, running health-checks on the respective links 516 and 518.

Data traffic on data VLAN1 506 and data VLAN2 514 may be forwarded across both links 516 and 518. If either link 516 or 518 fails, the data traffic from the failed link may be routed to the other link. It should be appreciated that failover and recover situations may be handled in the same manner as discussed above in regard to Figs. 1-4. Furthermore, it should be appreciated that links 516 and 518 may have equivalent bandwidths and equivalent costs. Thus, the load of the network may be spread across both links without incurring extra cost or loss of performance. In addition, using two links may double the bandwidth, allowing more throughput of traffic across the networking device.

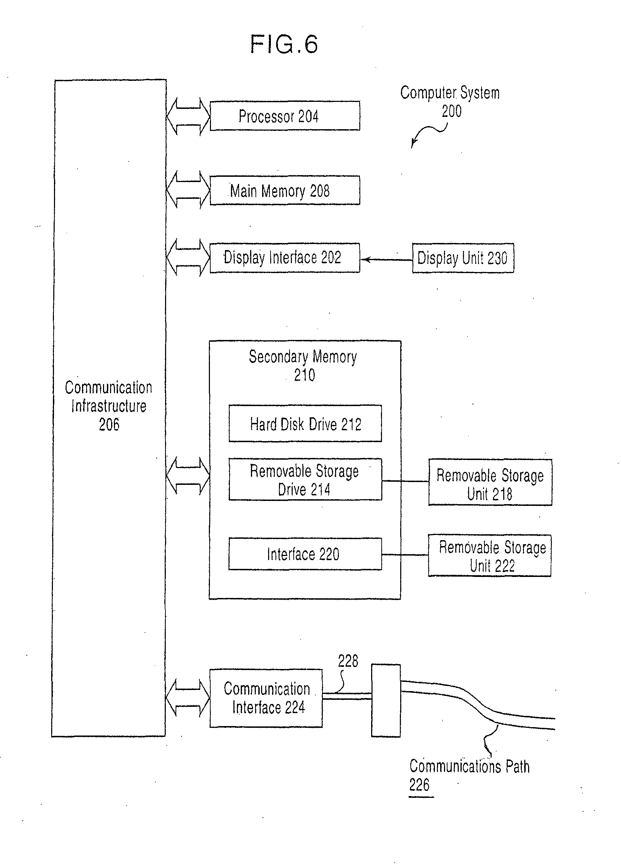

Aspects of the present invention may be implemented using hardware, software, or a combination thereof and may be implemented in one or more computer systems or other processing systems. In one aspect, the invention is directed toward one or more computer systems capable of carrying out the functionality described herein. An example of such a computer system 200 is shown in FIG. 6.

Computer system 200 includes one or more processors, such as processor 204. The processor 204 is connected to a communication infrastructure 206 (e.g., a communications bus, cross-over bar, or network). Various software aspects are described in terms of this exemplary computer system. After reading this description, it will become apparent to a person skilled in the relevant art(s) how to implement the invention using other computer systems and/or architectures.

Computer system 200 can include a display interface 202 that forwards graphics, text, and other data from the communication infrastructure 206 (or from a frame buffer not shown) for display on a display unit 230. Computer system 200 also includes a main memory 208, preferably random access memory (RAM), and may also include a secondary memory 210. The secondary memory 210 may include, for example, a hard disk drive 212 and/or a removable storage drive 214, representing a floppy disk drive, a magnetic tape drive, an optical disk drive, etc. The removable storage drive 214 reads from and/or writes to a removable storage unit 218 in a well-known manner. Removable storage unit 218, represents a floppy disk, magnetic tape, optical disk, etc., which is read by and written to removable storage drive 214. As will be appreciated, the removable storage unit 218 includes a computer usable storage medium having stored therein computer software and/or data.

In alternative aspects, secondary memory 210 may include other similar devices for allowing computer programs or other instructions to be loaded into computer system 200. Such devices may include, for example, a removable storage unit 222 and an interface 220. Examples of such may include a program cartridge and cartridge interface (such as that found in video game devices), a removable memory chip (such as an erasable programmable read only memory (EPROM), or programmable read only memory (PROM)) and associated socket, and other removable storage units 222 and interfaces 220, which allow software and data to be transferred from the removable storage unit 222 to computer system 200.

Computer system 200 may also include a communications interface 224. Communications interface 224 allows software and data to be transferred between computer system 200 and external devices. Examples of communications interface 224 may include a modem, a network interface (such as an Ethernet card), a communications port, a Personal Computer Memory Card International Association (PCMCIA) slot and card, etc. Software and data transferred via communications interface 224 are in the form of signals 228, which may be electronic, electromagnetic, optical or other signals capable of being received by communications interface 224. These signals 228 are provided to communications interface 224 via a communications path (e.g., channel) 226. This path 226 carries signals 228 and may be implemented using wire or cable, fiber optics, a telephone line, a cellular link, a radio frequency (RF) link and/or other communications channels. In this document, the terms "computer program medium" and "computer usable medium" are used to refer generally to media such as a removable storage unit 218, a hard disk installed in hard disk drive 212, and signals 228. These computer program products provide software to the computer system 200. The invention is directed to such computer program products.

Computer programs (also referred to as computer control logic) are stored in main memory 208 and/or secondary memory 210. Computer programs may also be received via communications interface 224. Such computer programs, when executed, enable the computer system 200 to perform the features of the present invention, as discussed herein. In particular, the computer programs, when executed, enable the processor 204 to perform the features of the present invention. Accordingly, such computer programs represent controllers of the computer system 200.

In an aspect where the invention is implemented using software, the software may be stored in a computer program product and loaded into computer system 200 using removable storage drive 214, hard drive 212, or communications interface 224. The control logic (software), when executed by the processor 204, causes the processor 204 to perform the functions of the invention as described herein. In another aspect, the invention is implemented primarily in hardware using, for example, hardware components, such as application specific integrated circuits (ASICs). Implementation of the hardware state machine so as to perform the functions described herein will be apparent to persons skilled in the relevant art(s).

In yet another aspect, the invention is implemented using a combination of both hardware and software.

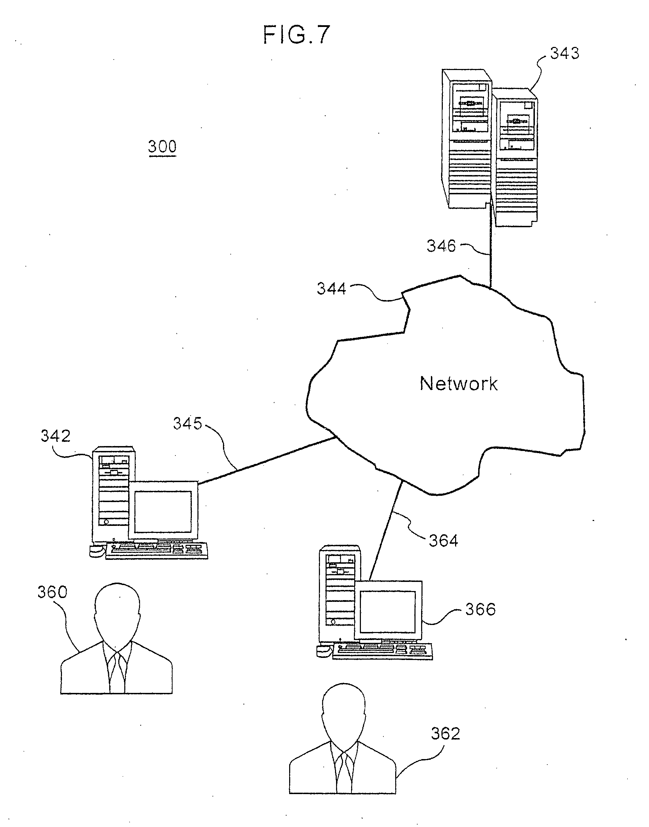

FIG. 7 shows a communication system 300 usable in accordance with aspects of the present invention. The communication system 300 includes one or more accessors 360, 362 (also referred to interchangeably herein as one or more "users") and one or more terminals 342, 366. In one aspect, data for use in accordance with aspects of the present invention is, for example, input and/or accessed by accessors 360, 362 via terminals 342, 366, such as personal computers (PCs), minicomputers, mainframe computers, microcomputers, telephonic devices, or wireless devices, such as personal digital assistants ("PDAs") or a hand-held wireless devices coupled to a server 343, such as a PC, minicomputer, mainframe computer, microcomputer, or other device having a processor and a repository for data and/or connection to a repository for data, via, for example, a network 344, such as the Internet or an intranet, and couplings 345, 346, 364. The couplings 345, 346, 364 include, for example, wired, wireless, or fiberoptic links. In another aspect, the method and system of the present invention operate in a stand-alone environment, such as on a single terminal.

While the present invention has been described in connection with preferred aspects, it will be understood by those skilled in the art that variations and modifications of the preferred aspects described above may be made without departing from the scope of the invention. Other aspects will be apparent to those skilled in the art from a consideration of the description or from a practice of the invention disclosed herein.

## Claims

1. A method for performing link failover management on a network device (702) which operates on a data network using the IP protocol, the method comprising:
configuring a plurality of links on the network device, wherein the plurality of links include a primary link (714) and a secondary link (708) for transferring data traffic on a data VLAN (704);
checking a state of the primary link via a health check message;
upon determining that the state of the primary link has failed, triggering the transfer of data traffic from the primary link to the secondary link; and
transmitting data traffic on the secondary link until receipt of a message indicating that the state of the primary link has recovered;
**characterised in that**:
checking the state of the primary link includes sending a ping message over a health check VLAN (706) that is logically separate from the data VLAN on both the primary link and the secondary link.

2. The method of claim 1, further comprising:
transferring the data traffic from the secondary link to the primary link upon receipt of the message indicating that the state of the primary link has recovered.

3. The method of claim 1, further comprising:
checking the state of the primary link via the primary link while the data traffic is on the secondary link.

4. The method of claim 1, wherein the checking is performed every second.

5. A system (700) for performing link failover management on a network device (702) which operates on a data network using the IP protocol, the system comprising:
a configuring means for configuring a plurality of links on the network device, wherein the plurality of links include a primary link (714) and a secondary link (708) for transferring data traffic on a data VLAN (704);
a checking means for checking a state of the primary link via a health check message;
a determining means for triggering the transfer of data traffic from the primary link to the secondary link, upon determining that the state of the primary link has failed; and
a transmitting means for transmitting data traffic on the secondary link until receipt of a message indicating that the state of the primary link has recovered;
**characterised in that**:
the health check message comprises a ping message that is transmitted over a health check VLAN (706) that is logically separate from the data VLAN (704) on both the primary link and the secondary link.

6. The system of claim 5, further comprising:
means for transferring the data traffic from the secondary link to the primary link upon receipt of the message indicating that the state of the primary link has recovered.

7. The system of claim 5, further comprising:
means for checking the state of the primary link via the primary link while the data traffic is on the secondary link.

8. The system of claim 5, wherein the checking is performed every second.

9. The system of claim 5 comprising:
a processor housed on a server that is coupled to a network;
a user interface functioning via the processor; and
a repository accessible by the processor via the network.

10. The system of claim 9, wherein the coupling is selected from a group consisting of a wired connection, a wireless connection, and a fiberoptic connection.

11. The system of claim 9, wherein the repository is housed on a server.

12. The system of claim 11, wherein the server is coupled to the network.

13. A computer program product comprising a computer usable medium having control logic stored therein for causing a computer to performing link failover management on a network device which operates on a data network using the IP protocol, the control logic comprising:
first computer readable program code means for configuring a plurality of links on the network device, wherein the plurality of links include a primary link (714) and a secondary link (708) for transferring data traffic on a data VLAN (704);
second computer readable program code means for checking a state of the primary link via a health check message;
third computer readable program code means for triggering the transfer of data traffic from the primary link to the secondary link, upon determining that the state of the primary link has failed; and
fourth computer readable program code means for transmitting data traffic on the secondary link until receipt of a message indicating that the state of the primary link has recovered;
**characterised in that**:
the health check message comprises a ping message that is transmitted over a health check VLAN (706) that is logically separate from the data VLAN on both the primary link and the secondary link.

## Patentansprüche

1. Verfahren zur Durchführung von Verbindungsausfallsicherungsverwaltung in einer Netzwerkvorrichtung (702), die unter Verwendung eines IP-Protokolls in einem Datennetzwerk arbeitet, wobei das Verfahren Folgendes umfasst:
Konfigurieren einer Vielzahl von Verbindungen in der Netzwerkvorrichtung, worin die Vielzahl von Verbindungen eine Primärverbindung (714) und eine Sekundärverbindung (709) zur Übertragung von Datenverkehr in einem Daten-VLAN (704) umfasst;
Überprüfen des Zustands der Primärverbindung durch eine Gesundheitsüberprüfungsnachricht;
nach dem Feststellen, dass der Zustand des Primärverbindung fehlgeschlagen ist, Auslösen der Übertragung von Datenverkehr von der Primärverbindung zur Sekundärverbindung; und
Übertragen von Datenverkehr auf der Sekundärverbindung bis zum Erhalt einer Nachricht, die anzeigt, dass der Zustand der Primärverbindung wiederhergestellt ist;
**dadurch gekennzeichnet, dass**:
das Überprüfen des Zustands der Primärverbindung das Senden einer Ping-Nachricht über ein Gesundheitsüberprüfungs-VLAN (706) umfasst, das logisch vom Daten-VLAN auf der Primärverbindung und der Sekundärverbindung getrennt ist.

2. Verfahren nach Anspruch 1, wobei das Verfahren ferner Folgendes umfasst:
Übertragen des Datenverkehrs von der Sekundärverbindung zur Primärverbindung nach Erhalt der Nachricht, die anzeigt, dass der Zustand der Primärverbindung wiederhergestellt ist.

3. Verfahren nach Anspruch 1, wobei das Verfahren ferner Folgendes umfasst:
Überprüfen des Zustands der Primärverbindung über die Primärverbindung, während der Datenverkehr auf der Sekundärverbindung vorliegt.

4. Verfahren nach Anspruch 1, worin die Überprüfung jede Sekunde durchgeführt wird.

5. System (700) zur Durchführung von Verbindungsausfallsicherungsverwaltung in einer Netzwerkvorrichtung (702), die unter Verwendung eines IP-Protokolls in einem Datennetzwerk arbeitet, wobei das System Folgendes umfasst:
ein Konfigurierungsmittel zum Konfigurieren einer Vielzahl von Verbindungen in der Netzwerkvorrichtung, worin die Vielzahl von Verbindungen eine Primärverbindung (714) und eine Sekundärverbindung (708) zum Übertragen von Datenverkehr in einem Daten-VLAN (704) umfasst;
Überprüfungsmittel zum Überprüfen des Zustands der Primärverbindung durch eine Gesundheitsüberprüfungsnachricht;
ein Feststellungsmittel zum Auslösen der Übertragung von Datenverkehr von der Primärverbindung zur Sekundärverbindung, nachdem festgestellt worden ist, dass der Zustand der Primärverbindung fehlgeschlagen ist; und
ein Übertragungsmittel zum Übertragen des Datenverkehrs auf die Sekundärverbindung bis zum Erhalt einer Nachricht, die anzeigt, dass der Zustand der Primärverbindung wiederhergestellt ist;
**dadurch gekennzeichnet, dass**:
die Gesundheitsüberprüfungsnachricht eine Ping-Nachricht umfasst, die über ein Gesundheitsüberprüfungs-VLAN (706) gesendet wird, das logisch vom Daten-VLAN (704) auf der Primärverbindung und der Sekundärverbindung getrennt ist.

6. System nach Anspruch 5, wobei das System ferner Folgendes umfasst:
Mittel zum Übertragen des Datenverkehrs von der Sekundärverbindung zur Primärverbindung nach Erhalt der Nachricht, die anzeigt, dass der Zustand der Primärverbindung wiederhergestellt ist.

7. System nach Anspruch 5, wobei das System ferner Folgendes umfasst:
Mittel zum Überprüfen des Zustands der Primärverbindung über die Primärverbindung, während der Datenverkehr auf der Sekundärverbindung liegt.

8. System nach Anspruch 5, worin die Überprüfung jede Sekunde durchgeführt wird.

9. System nach Anspruch 5, wobei das System Folgendes umfasst:
einen Prozessor, der auf einem Server untergebracht ist, der an ein Netzwerk gekoppelt ist;
eine Nutzerschnittstelle, die über den Prozessor funktioniert; und
eine vom Prozessor über das Netzwerk zugängliche Quelle.

10. System nach Anspruch 9, worin die Kopplung aus einer Gruppe bestehend aus einer Drahtverbindung, einer Drahtlosverbindung und einer Glasfaserverbindung ausgewählt ist.

11. System nach Anspruch 9, worin die Quelle auf einem Server untergebracht ist.

12. System nach Anspruch 11, worin der Server an das Netzwerk gekoppelt ist.

13. Computerprogrammprodukt, das ein computerlesbares Medium umfasst, das eine darin gespeicherte Steuerlogik zum Veranlassen eines Computers dazu, eine Verbindungsausfallsicherungsverwaltung in einer Netzwerkvorrichtung durchzuführen, die unter Verwendung eines IP-Protokolls mit einem Datennetzwerk arbeitet, aufweist, wobei die Steuerlogik Folgendes umfasst:
erste computerlesbare Programmkodemittel zum Konfigurieren einer Vielzahl von Verbindungen in der Netzwerkvorrichtung, worin die Vielzahl von Verbindungen eine Primärverbindung (714) und eine Sekundärverbindung (709) zur Übertragung von Datenverkehr auf ein Daten-VLAN (704) umfasst;
zweite computerlesbare Programmkodemittel zum Überprüfen des Zustands der Primärverbindung durch eine Gesundheitsüberprüfungsnachricht;
dritte computerlesbare Programmkodemittel zum Auslösen der Übertragung von Datenverkehr von der Primärverbindung zur Sekundärverbindung, nachdem festgestellt wurde, dass der Zustand des Primärverbindung fehlgeschlagen ist; und
vierte computerlesbare Programmkodemittel zum Übertragen von Datenverkehr auf die Sekundärverbindung bis zum Erhalt einer Nachricht, die anzeigt, dass der Zustand der Primärverbindung wiederhergestellt ist;
**dadurch gekennzeichnet, dass**:
die Gesundheitsüberprüfungsnachricht eine Ping-Nachricht umfasst, die über ein Gesundheitsüberprüfungs-VLAN (706) übermittelt wird, das logisch vom Daten-VLAN auf der Primärverbindung und der Sekundärverbindung getrennt ist.

## Revendications

1. Procédé pour exécuter une gestion de basculement de lien sur un dispositif de réseau (702) qui fonctionne sur un réseau de données utilisant le protocole IP, le procédé comprenant :
configurer une pluralité de liens sur le dispositif de réseau, où la pluralité de liens comprend un lien primaire (714) et un lien secondaire (708) pour transférer un trafic de données sur un VLAN de données (704) ;
vérifier un état du lien primaire via un message de bilan d'intégrité ;
lors de la détermination que l'état du lien primaire est défaillant, déclencher le transfert du trafic de données du lien primaire au lien secondaire ; et
transmettre le trafic de données sur le lien secondaire jusqu'à réception d'un message indiquant que l'état du lien primaire a été rétabli ;
**caractérisé en ce que** :
la vérification de l'état du lien primaire inclut l'envoi d'un message ping sur un VLAN de bilan d'intégrité (706) qui est logiquement séparé du VLAN de données à la fois sur le lien primaire et le lien secondaire.

2. Procédé selon la revendication 1, comprenant en outre :
transférer le trafic de données du lien secondaire au lien primaire lors de la réception du message indiquant que l'état du lien primaire a été rétabli.

3. Procédé selon la revendication 1, comprenant en outre :
vérifier l'état du lien primaire via le lien primaire pendant que le trafic de données a lieu sur le lien secondaire.

4. Procédé selon la revendication 1, dans lequel la vérification est effectuée à chaque seconde.

5. Système (700) pour exécuter une gestion de basculement de lien sur un dispositif de réseau (702) qui fonctionne sur un réseau de données utilisant le protocole IP, le système comprenant :
un moyen de configuration pour configurer une pluralité de liens sur le dispositif de réseau, où la pluralité de liens comprennent un lien primaire (714) et une lien secondaire (708) pour transférer le trafic de données sur un VLAN de données (704) ;
un moyen de vérification pour vérifier un état du lien primaire via un message de bilan d'intégrité ;
un moyen de détermination pour déclencher le transfert du trafic de données du lien primaire au lien secondaire, lors de la détermination que l'état du lien primaire est défaillant ; et
un moyen de transmission pour transmettre le trafic de données sur le lien secondaire jusqu'à la réception d'un message indiquant que l'état du lien primaire a été rétabli ;
**caractérisé en ce que** :
le message de bilan d'intégrité comprend un message ping qui est transmis via un VLAN de bilan d'intégrité (706) qui est logiquement séparé du VLAN de données (704) à la fois au lien primaire et au lien secondaire.

6. Système selon la revendication 5, comprenant en outre :
des moyens pour transférer le trafic de données du lien secondaire au lien primaire lors de la réception du message indiquant que l'état du lien primaire a été rétabli.

7. Système selon la revendication 5, comprenant en outre :
des moyens pour vérifier l'état du lien primaire via le lien primaire pendant que le trafic de données a lieu sur le lien secondaire.

8. Système selon la revendication 5, dans lequel la vérification est exécutée à chaque seconde.

9. Système selon la revendication 5, comprenant :
un processeur logé sur un serveur qui est couplé à un réseau ;
une interface utilisateur fonctionnant via le processeur ; et
un répertoire accessible par le processeur via le réseau.

10. Système selon la revendication 9, dans lequel le couplage est sélectionné dans un groupe consistant en une connexion câblée, une connexion sans fil et une connexion à fibre optique.

11. Système selon la revendication 9, dans lequel le répertoire est logé sur un serveur.

12. Système selon la revendication 11, dans lequel le serveur est couplé au réseau.

13. Produit de programme d'ordinateur comprenant un support utilisable sur ordinateur ayant une logique de commande stockée dans celui-ci pour amener un ordinateur à exécuter une gestion de basculement de lien sur un dispositif de réseau qui fonctionne sur un réseau de données utilisant le protocole IP, la logique de commande comprenant :
un premier moyen de code programme lisible par ordinateur pour configurer une pluralité de liens sur le dispositif de réseau, où la pluralité de liens comprennent un lien primaire (714) et un lien secondaire (708) pour transférer le trafic de données sur un VLAN de données (704) ;
un deuxième moyen de code programme lisible par ordinateur pour vérifier un état du lien primaire via un message de bilan d'intégrité ;
un troisième moyen de code programme lisible par ordinateur pour déclencher le transfert du trafic de données du lien primaire au lien secondaire, lors de la détermination que l'état du lien primaire est défaillant ; et
un quatrième moyen de code programme lisible par ordinateur pour transmettre le trafic de données sur le lien secondaire jusqu'à la réception d'un message indiquant que l'état du lien primaire a été rétabli ;
**caractérisé en ce que** :
le message de bilan d'intégrité comprend un message ping qui est transmis sur un VLAN de bilan d'intégrité (706) qui est logiquement séparé du VLAN de données à la fois au lien primaire et au lien secondaire.
